# EUROPÄISCHE PATENTSCHRIFT

(11) **EP 2 492 071 B1**
(45) Veröffentlichungstag und Bekanntmachung des Hinweises auf die Patenterteilung: **26.10.2016**
(21) Anmeldenummer: 12155932.2
(22) Anmeldetag: 17.02.2012
(51) Int. Cl.: B27D 5/00, B27G 13/00, B23C 3/12

(54) **Fräsmotor mit mehreren Spindeln**
Milling motor with multiple spindles
Moteur de fraisage doté de plusieurs broches

(30) Priorität: 22.02.2011 DE 102011004536
(43) Veröffentlichungstag der Anmeldung: 29.08.2012
(73) Patentinhaber: HOMAG GmbH, 72296 Schopfloch (DE)
(72) Erfinder: Kalmbach, Wilhelm, 72296 Schopfloch (DE)
(74) Vertreter: Hoffmann Eitle

(56) Entgegenhaltungen:
- EP-A1- 2 011 614
- EP-A1- 2 363 259
- DE-C2- 19 915 672
- DE-U1-202010 010 704

## Beschreibung

Die Erfindung betrifft eine Mehrprofilfräsvorrichtung zur spanenden Bearbeitung von bevorzugt plattenförmigen Werkstücken aus Holz, Holzwerkstoffen und/oder Kunststoffen gemäß dem Oberbegriff des Anspruchs 1. Eine solche Vorrichtung ist aus der DE 19915672 bekannt.

### Stand der Technik

Bei einem gängigen Multifräser, d.h. bei einem Fräswerkzeug mit mehr als einem Profil, sind diese Profile an einem einzelnen Fräskopf ausgebildet und in Axialrichtung übereinander angeordnet. Wird nun gewünscht, einen Profilwechsel vorzunehmen, muss der Fräskopf in axialer Richtung zum Werkstück verstellt werden. Gleichzeitig muss aber auch der radiale Abstand zum Werkstück verändert werden, da die Abschnitte mit den verschiedenen Profilen des Fräswerkzeugs verschiedene Durchmesser aufweisen. Dazu muss wiederum eine Abstandsvorrichtung, wie beispielsweise eine Tastrolle, verstellt oder ausgetauscht werden. Zusätzlich ergibt sich das Problem, dass beim Verschleiß der Schneiden eines einzelnen Profils bei einem solchen Multifräser immer das gesamte Fräswerkzeug ausgetauscht werden muss, da das gesamte Fräswerkzeug einstückig ausgebildet ist. Dadurch werden auch die noch nicht abgenutzten Schneiden getauscht, was einen unnötigen Verbrauch von Material fördert. Eine Lösung für dieses Problem kann darin liegen, die Schneiden an den Werkzeugen jeweils einzeln zu befestigen. Dies erhöht jedoch den Aufwand immens, die einzelnen Schneiden auszutauschen.

Die EP 2 011 614 A1 offenbart eine Fräsvorrichtung, die zwei von Fräswerkzeuge mit verschiedenen Profilen umfasst. Das erste Fräswerkzeug ist dabei in einer Arbeitstellung, das zweite Fräswerkzeug ist mit einem Lager auf einem Schiebezylinder gelagert. Wenn das zweite Werkzeug in eine Arbeitstellung bewegt werden soll, wird der Schiebezylinder nach vorne bewegt und das zweite Werkzeug in Arbeitsstellung gebracht. Da der Schiebezylinder nicht rotiert und das zweite Werkzeug nicht unabhängig angetrieben werden kann, wird die Drehung des ersten Werkzeugs über entsprechende Flächen auf das zweite Werkzeug übertragen. Bei einer solchen Rotationsübertragung besteht das Risiko, dass die Werkzeuge beschädigt werden könnten, wenn die Übertragungsflächen beim Anlaufen aufeinander auftreffen. Ferner ist auch der Verschleiß sehr hoch, der beim Wechseln der Profile während der laufenden Fräseinrichtung entsteht. Außerdem ist das zweite Werkzeug direkt auf einem Kugellager mit dem Schiebezylinder verbunden. Deshalb muss das zweite Werkzeug mit einer entsprechenden Schrumpfpassung versehen sein, damit auch ein sicherer Betrieb gewährleistet ist und sich das Werkzeug nicht zufällig lösen kann. Eine solche Befestigungsart kann in der Regel nur von fachkundigem Personal gelöst werden, weswegen ein Austausch der Werkzeuge in dieser Konstruktion auch schwierig ist.

Eine andere Fräsvorrichtung mit zwei unterschiedlich profilierten Werkzeugen ist in der DE 199 15 672 C2 gezeigt. Hier ist das erste Werkzeug ebenfalls in einer Arbeitsstellung und das zweite Werkzeug wird über einen äußeren Schiebezylinder nach vorne bewegt. Das Werkzeug ist dabei mit der Antriebswelle des ersten Werkzeugs drehfest verbunden. Diese Konstruktion erfordert jedoch ein speziell angefertigtes Werkzeug. Darüber hinaus macht der äußere Schiebezylinder das Austauschen des zweiten Werkzeugs kompliziert, weswegen auch hier fachkundiges Personal notwendig ist.

Als weiteres nachveröffentlichtes Dokument ist die EP 2 363 259 A1 zu nennen, die eine Mehrprofilfräsvorrichtung betrifft.

### Darstellung der Erfindung

Eine Aufgabe der Erfindung ist es daher, eine Fräsvorrichtung bereitzustellen, welche mit einer einfachen Konstruktion eine starke Erhöhung der Flexibilität einer Mehrprofilfräsvorrichtung ermöglicht.

Diese Aufgabe wird durch eine Vorrichtung gemäß Anspruch 1 gelöst. Weitere, die Erfindung ausgestaltende Merkmale, sind in den abhängigen Ansprüchen enthalten. Dadurch, dass ein zusätzliches Element, nämlich die Antriebsspindel, zwischen Bewegungseinrichtung, vorzugsweise ein Schiebezylinder, und Werkzeug eingefügt wird, erhöhen sich die Möglichkeiten der Ausgestaltung und damit die Flexibilität einer Mehrprofilfräsvorrichtung drastisch.

Die Bewegungseinrichtung wird dabei bevorzugt elektropneumatisch, elektrohydraulisch und/oder elektromagnetisch bewegt.

Die Vorrichtung kann ferner eine dritte Fräseinrichtung aufweisen, die ein drittes Fräswerkzeug mit einem dritten Bearbeitungsprofil und eine dritte Antriebsspindel aufweist, wobei die dritte Fräseinrichtung koaxial mit der ersten Fräseinrichtung angeordnet ist und die dritte Fräseinrichtung zwischen der Arbeitsstellung und einer Leerlauf-Ruhestellung axial zur ersten Fräseinrichtung bewegbar ist. Eine dritte oder auch weitere Fräseinrichtungen, sind aufgrund der durch die zusätzlichen Antriebsspindeln verbesserten Konstruktion dahingehend vorteilhaft, dass die Bearbeitungsvorrichtung insgesamt flexibler bei der Bearbeitung von mehreren verschiedenen Kantenformen wird.

Bevorzugt ist die Bearbeitungsvorrichtung so eingerichtet, dass das Bearbeitungsprofil des dritten Fräswerkzeugs das Bearbeitungsprofil des ersten und des zweiten Fräswerkzeugs überlagert, so dass das bearbeitete Werkstück das dritte Bearbeitungsprofil erhält, wenn sich die dritte Fräseinrichtung in der Arbeitsstellung befindet. Dies vereinfacht weiter die Konstruktion, da die erste und die zweite Fräseinrichtung in Arbeitsstellung verbleiben können, wenn die dritte Fräseinrichtung in die Arbeitsstellung geschaltet wird. Dies ist vor allem im Vergleich dazu zu sehen, wenn die zweite Fräseinrichtung aus der Arbeitsstellung zurückgezogen wird, wenn die dritte Fräseinrichtung in Arbeitsstellung gebracht wird. Vorzugsweise sind alle Antriebsspindeln als Hohlwellen ausgestaltet, so dass Material gespart werden kann.

Weiter bevorzugt wird die Rotation der ersten Antriebsspindel über eine Verbindung mit der zweiten und/oder dritten Antriebsspindel, bspw. eine Verbindung durch Mitnehmerstifte, auf die jeweiligen Antriebsspindeln der Werkzeuge übertragen.

### Kurze Beschreibung der Figuren

- Figur 1: zeigt die isometrische Ansicht einer Ausführungsform der vorliegenden Erfindung mit drei FräsWerkzeugen;
- Figur 2: zeigt die Bearbeitungsvorrichtung aus Figur 1 in einer Draufsicht auf die Fräswerkzeuge;
- Figur 3: zeigt die Bearbeitungsvorrichtung aus Figur 1 in einer Schnittansicht der Linie vom III - III in Figur 2;
- Figur 4: zeigt die Bearbeitungsvorrichtung aus Figur 1 in einer Schnittansicht der Linie vom IV - IV in Figur 2;
- Figur 5: zeigt die Bearbeitungsvorrichtung aus Figur 1 in einer Schnittansicht der Linie vom V - V in Figur 2 .

### Darstellung bevorzugter Ausführungsformen

Im Folgenden werden die Richtungsangaben "oben" und "unten" verwendet, wobei "unten" die Seite der der Antriebsspindeln in deren Axialrichtung bezeichnet, auf der die Werkzeuge (die Fräse) angeordnet sind. Die gegenüberliegende Richtung wird mit "oben" bezeichnet.

Die Erfindung betrifft eine Mehrprofilfräsvorrichtung für bevorzugt plattenförmige Werkstücke aus Holz, Holzwerkstoffen und/oder Kunststoffen, die für die Bearbeitung der Schmalseiten bzw. der Kanten der Schmalseiten vorgesehen ist.

Die Vorrichtung enthält ein Motorgehäuse 11, 9, in dem eine Wicklung (nicht gezeigt) vorgesehen ist. Vorliegend ist das Gehäuse mehrteilig mit den Gehäuseteilen 11.1 und 11.2 des Hauptgehäuses 11 und einem Deckel 9 ausgeführt, jedoch kann eine entsprechende Konstruktion selbstverständlich auch als ein einzelnes Hauptgehäuseteil 11 mit Deckel 9 ausgeführt werden.

In diesem Gehäuse 11, 9 ist eine axial feste Antriebsspindel 1, bevorzugt eine Hohlspindel (Hohlwelle) an Kugellagern 22 gelagert. An der Antriebsspindel 1 ist entsprechend zu den Statorwicklungen im Gehäuseteil 11.1 ein Rotor 10 befestigt, der durch die im Gehäuse 11 integrierten Wicklungen angetrieben wird. Der Stator im Gehäuse 11 und der Rotor an der Antriebsspindel 1 bilden somit einen Motor aus für die Antriebsspindel 1 aus. Die erste Antriebsspindel 1 ist in dieser Ausführungsform eine direkt vom Motor angetriebene Welle oder Hohlwelle, die zumindest das erste Werkzeug W1 antreibt.

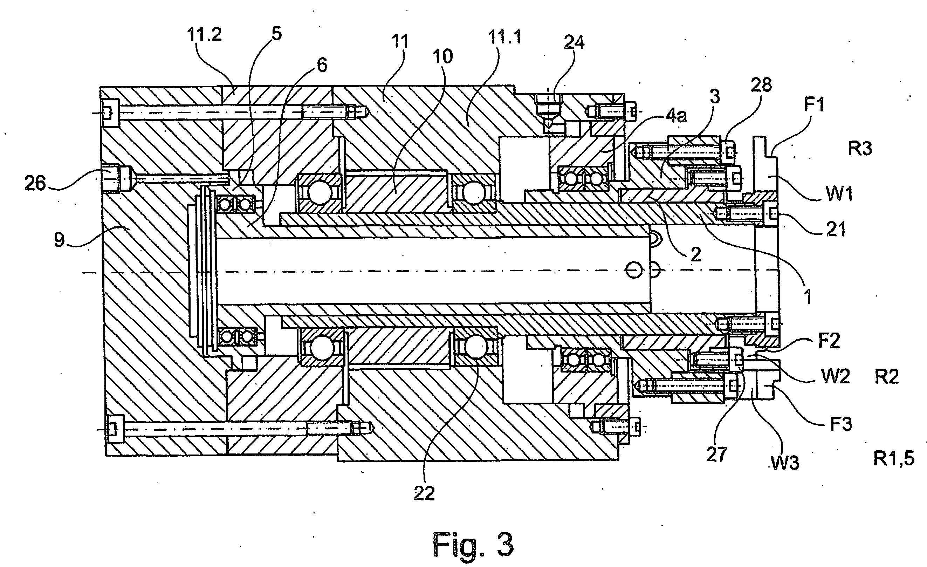

Die Antriebsspindel 1 ist in Bezug auf das Gehäuse 11 axial fest gelagert, indem die Gehäuseteile 11.1 und 11.2 in Verbindung mit der Antriebsspindel 1 entsprechend ausgebildet sind (siehe bspw. Figur 3). In einer Ausführungsform mit einem einstückigen Gehäuse 11, können die Lager 22 auch mit Sprengringen oder anderen herkömmlichen Mitteln in Axialrichtung befestigt werden.

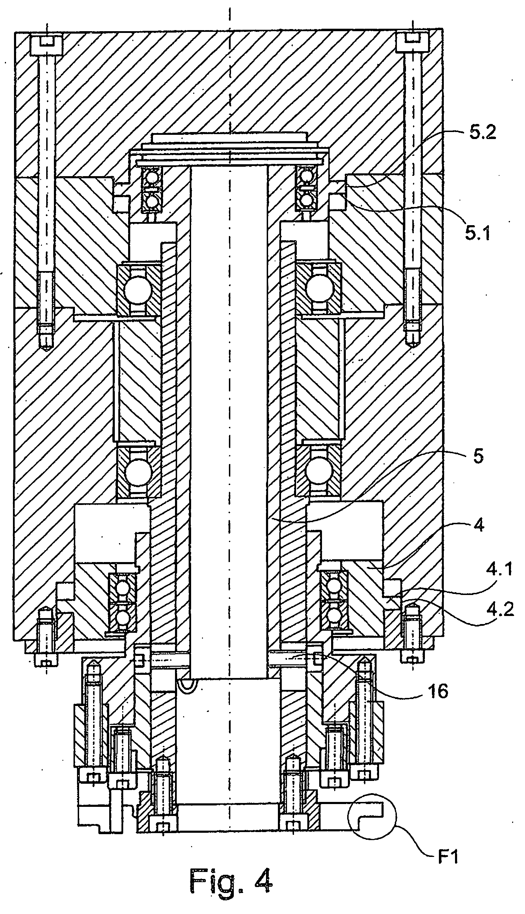

An dieser axial festen Spindel 1 ist ein erstes Werkzeug W1 befestigt, das einen ersten Fräsabschnitt F1 mit einem ersten Profil, beispielsweise einen Radius R3 (3mm), aufweist. Dieses Werkzeug W1 ist vorzugsweise mit einem Befestigungsmittel 21, insbesondere Schrauben, an der Stirnseite der axial festen Spindel 1 befestigt (siehe Figuren 3 und 4). Das Werkzeug W1 befindet sich in einer Arbeitstellung und fräst im Betrieb an einem vorbeilaufenden Werkstück eine Kante der Schmalseite auf das entsprechende Werkstückprofil (vorliegend z.B. auf R3).

Eine zweite Spindel 2 (Welle), die eine verschiebbare Hohlspindel (Hohlwelle) ist, ist an der axial festen Spindel 1 so gelagert, dass sie in Axialrichtung relativ zur ersten Antriebsspindel 1 verschiebbar ist. An der zweiten Spindel 2 ist ein zweites Werkzeug W2 drehfest befestigt, das einen zweiten Fräsabschnitt F2 mit einem zweiten Bearbeitungsprofil aufweist, in der vorliegenden Ausführungsform ein zweiter Radius R2 (2mm). Bevorzugt wird das zweite Werkzeug W2 an der Stirnseite der zweiten Hohlspindel 2 mit Befestigungsmitteln 27 befestigt, insbesondere mittels Schrauben. Vorzugsweise ist die zweite Spindel 2 drehfest mit der ersten Antriebsspindel 1 verbunden, so dass sie sich mit der ersten Antriebsspindel 1 im Gleichlauf befindet. Vorliegend wird eine solche Verbindung der zweiten Hohlspindel 2 mit der ersten Antriebsspindel 1 über einen Mitnehmerstift 16 realisiert (siehe Figur 4). Es sind aber auch andere Verbindungen denkbar, bspw. über ein formschlüssiges Innenoder Außenprofil der (Antriebs-)Spindeln 1 und 2. Ebenfalls wäre denkbar, dass die Spindel 2 einen eigenen Rotor aufweist, der auch von den Statorwicklungen im Gehäuse angetrieben wird, möglicherweise auch von eigenen Statorwicklungen, die extra für den Rotor der zweiten Spindel 2 vorgesehen sind (die dann auch eine Antriebsspindel wäre).

Die axiale Verschiebbarkeit wird über die Bewegungseinrichtungen gesteuert. Vorliegend ist das ein Schiebezylinder 5 mit dem die Spindel 2 verbunden ist. Der Schiebezylinder 5 wird über eine pneumatische Leitung 26 axial verschoben. Der Schiebezylinder 5 für die Hohlspindel 2 und somit für das Werkzeug W2 ist in einem Verschieberaum angeordnet und ist in den Figuren 3 und 4 in seiner zurückgezogenen Position zu sehen. Der Schiebezylinder 5 ist bevorzugt drehfest im Gehäuse 11, 9 angeordnet, so dass sich der Schiebezylinder nur in axialer Richtung, aber nicht in Umfangsrichtung drehen kann. Beispielsweise können eine oder mehrere axial verlaufende Nuten im Gehäuse vorgesehen sein, in die ein Vorsprung 5.1 des Schiebezylinders eingreift. Es ist aber ebenfalls möglich, dass der Schiebezylinder 5 rotationssymmetrisch ausgestaltet ist, und seine Reibung mit der Gehäusewand eine Bewegung in Umfangsrichtung (also eine Drehung) verhindert. Der Vorsprung kann in diesem Fall ein Bereich mit einem größeren Durchmesser sein, der um den gesamten Umfang des Zylinders 5 vorgesehen ist. Wie oben erwähnt wird der Schiebezylinder 5 vorliegend mit Hilfe von Druckluft, die über eine Druckleitung 26 in den Verschieberaum geleitet wird, axial verschoben. An der Außenseite des Schiebezylinders 5 ist daher eine Dichtlippe 5.2, bspw. ein Gummiring, vorgesehen, der zwischen dem Gehäuse 11, 9 (vorliegend im Teilgehäuse 11.2) und dem Schiebezylinder 5 abdichtet und dafür sorgt, dass keine Leckage entsteht. Diese Dichtlippe erhöht auch bei einem rotationssymmetrischen Zylinder die Reibung, die einer Drehung des Schiebezylinders entgegenwirkt. Der Schiebezylinder 5 für die Hohlspindel 2 und somit für das Werkzeug W2 ist in seinem Verschieberaum in den Figuren 3 und 4 in seiner zurückgezogenen Position zu sehen. Da sich die Spindel 2 des Werkzeugs W2 dreht, der Schiebezylinder 5 jedoch nicht, ist der Schiebezylinder in Umfangsrichtung über eine Lagerung 23 von der Spindel 2 entkoppelt. Die Lagerung 23 ist jedoch im Schiebezylinder 5 und in Bezug auf die Spindel in Axialrichtung fixiert, so dass die Verschiebekraft an die Spindel 2 übertragen werden kann. Die Lagerung wird vorliegend durch Kugellager realisiert, kann aber wie alle anderen Lagerungen in dieser Beschreibung durch andere übliche Lagerformen ersetzt werden, die für die notwendige Axialkraftübertragung geeignet sind.

Die zweite Spindel ist also bevorzugt zwischen einer Bewegungseinrichtung, bevorzugt dem Schiebezylinder 5, und dem zweiten Werkzeug W2 angeordnet.

In der vorliegenden Ausführungsform ist der Schiebezylinder 5 oben im Gehäuse 11, 9 angeordnet, während die Spindel 2 für das Werkzeug W2 unten im Gehäuse 11 angeordnet ist, wobei sich in Axialrichtung dazwischen der Motor befindet. Dadurch kann in dieser Ausführungsform der Schiebezylinder 5 nicht direkt über die Lagerung 23 mit der Spindel 2 verbunden werden. Deshalb ist vorliegend die erste axialfeste Antriebsspindel 1 für das erste Werkzeug W1 als Hohlspindel ausgebildet. In dieser Hohlspindel 1 ist eine weitere Welle, vorzugsweise eine Hohlwelle, angeordnet, die oben mit dem Schiebezylinder 5 über die Lagerung verbunden ist. Unten wird die Axialbewegung bevorzugt über den oder die Mitnehmerstift(e) 16 auf die Spindel 2 übertragen. Es können jedoch auch separate Übertragungsmittel vorgesehen sein, oder die Welle 6 einstückig mit der Spindel 2 ausgebildet sein.

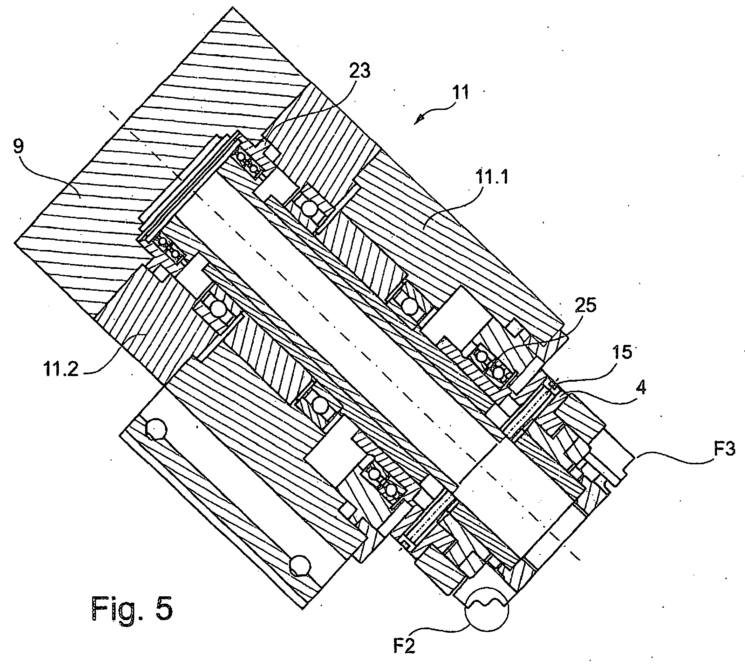

Wird nun über den Kanal 26 Fluid (z.B. Luft oder ein Hydrauliköl) hinter den Schiebezylinder 5 gebracht, wird dessen Kolbenfläche, die sich auf der Seite des Fluidkanals 26 des Vorsprungs 5.1 befindet, des mit Luft beaufschlagt. Dadurch verschiebt sich der Schiebezylinder 5, bis sein Anschlag 5.1 gegen einen komplementären Anschlag im Gehäuse 11, 9 anschlägt (siehe Figuren 3 bis 5). Dadurch wird das Werkzeug W2 von der zurückgezogenen Position in Ruhestellung, in die vorgeschobene Position der Arbeitsstellung gebracht. Um den Schiebezylinder 5 für die Spindel 2 zurückzuziehen, kann auf der gegenüber liegenden Seite der Fluidleitung 26 eine Feder sein, die Schiebezylinder so vorspannt, dass beim Nachlassen des Drucks über dem Schiebezylinder 5 dieser axial zurückgezogen wird, so dass das Werkzeug W2 wieder aus der Arbeitsstellung in die Leerlaufstellung gebracht wird. Bevorzugt ist jedoch, dass eine separate Druckleitung (nicht gezeigt) in den Verschieberaum unter den Schiebezylinder 5 führt, der dann mit Druck beaufschlagt wird und den Schiebezylinder 5 so wieder in Leerlaufstellung bringt. Auch eine Erzeugung von Vakuum im oben liegenden Fluidkanal kann ausreichen, so dass auf ein zusätzliches Element verzichtet werden könnte und nur der Fluidkanal 26 vorgesehen ist. Ebenfalls ist es möglich, dass der Schiebezylinder 5 über Magnetventile gesteuert wird, so dass die Verschiebung des Schiebezylinders 5 magnetisch erfolgt. Dazu sollten dann im Gehäuse 11, 9 entsprechende Elemente vorgesehen werden (in der vorliegenden Ausführungsform nicht gezeigt), wobei entweder zwei verschiedene elektromagnetische Zustände für die Leerlaufstellung und die Arbeitsstellung pro Schiebezylinder vorgesehen sind, oder die Schiebezylinder mit einer Feder in Leerlaufstellung vorgespannt sind und die elektromagnetische Kraft die Schiebezylinder, bzw. die Werkzeuge nur in Arbeitsstellung und die Federkraft wieder zurück in die Leerlaufstellung bringen.

In der vorliegenden Ausführungsform ist es ferner ein drittes Werkzeug W3 mit einem dritten Bearbeitungsprofil, vorliegend Radius R1,5 (1,5mm), vorgesehen. Das dritte Werkzeug W3 sitzt auf einer verschiebbaren Spindel 3, die als Hohlspindel ausgebildet ist und von zur verschiebbaren Spindel 2 verschieden ist. Vorliegend ist die verschiebbare Spindel 3 in Axialrichtung über der verschiebbaren Spindel 2 angeordnet und wird über einen Schiebezylinder 4 von der. Leerlaufstellung in die Arbeitsstellung gebracht (in den Figuren 3 bis 5 ist die Spindel 3 in Arbeitsstellung gezeigt). Dazu ist in der vorliegenden Ausführungsform ein Fluidkanal 24 vorgesehen, der den Schiebezylinder 4 in die Arbeitsstellung bringt (siehe Figuren 3 und 4). Die Steuerung und die Ausgestaltung des Schiebezylinders 4 wird bevorzugt analog zur oben beschriebenen Steuerung und Konstruktion des Schiebezylinders 5 durchgeführt, einschließlich der Ausgestaltung des Schiebezylinders 4 mit einem Vorsprung 4.1 und Dichtlippe 4.2. Gleiches gilt für das Zurückführen in die Leerlaufstellung, das entweder durch Unterdruck in der Fluidleitung, durch eine Vorspannfeder, die eine Kraft in Richtung der Leerlaufstellung aufbringen kann, oder durch einen zusätzlichen Druckkanal unter den Schiebezylinder 4 geschehen kann. Eine magnetische ist ebenfalls möglich. Die dritte Spindel ist also bevorzugt zwischen einer Bewegungseinrichtung, bevorzugt dem Schiebezylinder 4, und dem dritten Werkzeug W3 angeordnet.

Die verschiebbare Spindel 3 weist einen Mitnehmerstift auf (einstückig oder als separates Element), der durch die axial feste Spindel 1 hindurchgeht und so die Rotation der axial festen Spindel übernimmt. Das Werkzeug W3 ist ebenfalls bevorzugt mit Befestigungsmitteln an der Stirnseite der verschiebbaren Spindel 3 befestigt, wobei die Befestigungsmittel bevorzugt Schrauben sind.

Die verschiebbaren Spindeln 2 und 3 drehen sich jeweils mit der axial festen Spindel, wobei die Schiebezylinder 4 und 5 sich nur axial bewegen und jeweils über Kugellager 23, 25 mit den jeweiligen Spindeln 2 und 3 verbunden sind.

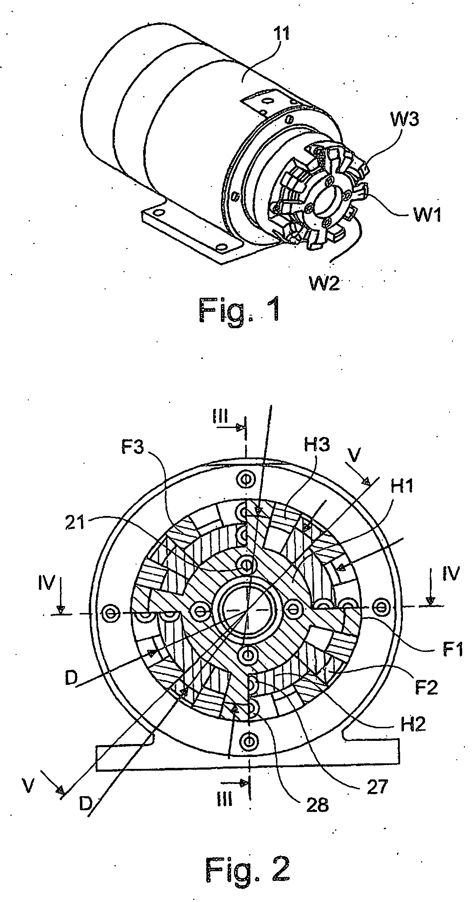

Der Durchmesser D (dargestellt in Figur 2) der jeweiligen Fräsabschnitte F1, F2, F3 der Werkzeuge W1, W2, W3 (usw.), der den Abstand zwischen den Schneidprofilen anzeigt, ist gleich, so dass das engere Profil mit Radius R2 des Werkzeugs W2 das Profil mit Radius R3 des Werkzeugs W1 überlagert, wenn sich beide in Arbeitstellung befinden. Die Mehrprofilfräsvorrichtung ist also derart eingerichtet, dass das Bearbeitungsprofil des zweiten Fräswerkzeugs das Bearbeitungsprofil des ersten Werkzeugs so überlagert, dass das bearbeitete Werkstück das zweite Bearbeitungsprofil erhält, wenn sich die zweite Fräseinrichtung in der Arbeitsstellung befindet. So wird sichergestellt, dass, obwohl beide Werkzeuge gleichzeitig ein Werkstück bearbeiten, nur das Profil des Werkzeugs W2 auf das bearbeitete Werkstück übertragen wird. Das Werkzeug W3 besitzt vorzugsweise ein Bearbeitungsprofil, das sowohl das Bearbeitungsprofil des Werkzeugs W1 als auch des zweiten Werkzeugs W2 überlagert.

Generell wird dann je nach gewünschtem Bearbeitungsprofil nur das Werkzeug W1, auch das Werkzeug W2 oder zusätzlich das Werkzeug W3 in Arbeitsstellung gebracht. In einer anderen bevorzugten Ausführungsform wird das Werkzeug W2 zurückgezogen, wenn das Werkzeug W3 in Arbeitstellung gebracht wird, so dass das Werkzeug W3 nur das Bearbeitungsprofil des Werkzeugs W1 überlagert. Vorteilhaft ist außerdem, dass sich die Werkzeuge W2 and W3 vorliegend immer zusammen mit dem Werkzeug W1 drehen, so dass während der Bearbeitung das Bearbeitungsprofil umgestellt werden kann, ohne das die Maschine angehalten werden muss. Dies wird zum Einen durch die Schiebezylinder ermöglicht, die axial zusammen mit den verschiebbaren Spindeln fixiert sind, die jedoch in Umlaufrichtung relativ zu den Hohlspindeln bewegbar sind, bzw. keine eigene Drehung in Bezug auf das Gehäuse aufweisen. Zum Anderen durch die Drehfeste Verbindung (Mitnehmerstifte 15, 16) der axial beweglichen Spindeln 2, 3 mit der axialfesten Antriebsspindel 1.

Wenn, wie oben erwähnt, für jede Antriebsspindel 1, 2, 3 ein eigener Rotor vorgesehen ist, dann muss sich die jeweilige Antriebsspindel nicht mit der ersten Antriebsspindel 1 mitdrehen, und die Mitnehmerstifte können weggelassen werden, wenn sie nur zum Aufnehmen der Rotation vorgesehen sind. Die jeweiligen Antriebsspindeln 2, 3 können dann in einer Ruhestellung sein und bei Bedarf in einen Leerlauf geschaltet werden. Danach, also wenn die Antriebsspindeln 2, 3 mit der ersten Antriebsspindel 1 im Gleichlauf sind, kann dann das entsprechende Werkzeug W2, W3 in Arbeitsstellung gebracht werden.

Die einzelnen Fräswerkzeuge mit unterschiedlichen Bearbeitungsprofilen sind jeweils koaxial angeordnet und weisen Fräsabschnitte F1, F2, F3 auf, mit den jeweiligen Bearbeitungsprofilen. Wie oben erwähnt, sind die einzelnen Werkzeuge jeweils an den zugehörigen (Antriebs-)spindeln 1, 2, 3 befestigt, bevorzugt jeweils an deren Stirnseite. Die Befestigungsmittel 21, 27, 28 sind dabei vorzugsweise Schrauben, wobei die Befestigungsmittel bevorzugt außermittig angeordnet sind, so dass durch die Rotation der (Antriebs) spindel 1, 2, 3 und der Werkzeuge W1, W2, W3 sich die Befestigungsmittel nicht aus Versehen öffnen können.

Generell muss, wenn ein beliebiges Werkzeug ausgetauscht werden soll, zunächst das erste Werkzeug W1 abgenommen werden, so dass auf das zweite Werkzeug W2 zugegriffen werden kann (siehe Figuren 2 und 3). Es gilt dasselbe, wenn das Werkzeug W3 ausgetauscht werden soll, für das Werkzeug W2. Das heißt, das Werkzeug W2.muss entfernt werden, bevor das Werkzeug W3 abgenommen werden kann. Dann wird das entsprechende Werkzeug ausgetauscht und wieder in umgekehrter Reihenfolge an der Bearbeitungsvorrichtung jeweils an den zugehörigen Hohlspindeln befestigt.

Es ist jedoch möglich, zumindest ein zweites Werkzeug W2 so auszubilden, dass es in seinem Hauptkörper ein Loch mit einem Durchmesser aufweist, der größer ist als der Außendurchmesser des ersten Werkzeugs (inkl. der Fräsabschnitte F1). Da das erste Werkzeug, wie in Figur 2 zu sehen ist, aus einem Hauptkörper H1 und den Fräsabschnitten F1 ausgebildet ist, die sich vorliegend in gleichen Abständen radial nach Außen von dem Hauptkörper H1 erstrecken, könnte bei einem Werkzeug W2, dessen Hauptkörper H2 das Loch mit einem Innendurchmesser aufweist, der größer als der Außendurchmesser der Fräsabschnitte F1 ist, auch abgenommen werden, ohne dass das Werkzeug W1 zuerst abgenommen werden müsste. Lediglich bei drei oder mehr Werkzeugen lässt es sich nicht vermeiden, dass für das dritte Werkzeug W3 (und jedes weitere) zumindest das erste oder zweite Werkzeug W1, W2 abgenommen werden müsste, solange die Fräsabschnitte, bzw. das Schneidprofil den gleichen Durchmesser D aufweisen sollen. Fällt diese Anforderung weg, kann man die Fräswerkzeuge W1, W2, W3, usw. jeweils mit einem Hauptkörper H1, H2, H3 so mit einer Aussparung, bzw. einem Loch ausbilden, dass sie immer einzeln abgenommen werden können.

## Patentansprüche

1. Mehrprofilfräsvorrichtung zur spanenden Bearbeitung von bevorzugt plattenförmigen Werkstücken aus Holz, Holzwerkstoffen und/oder Kunststoffen, insbesondere zur Bearbeitung der Kanten der Schmalseiten der Werkstücke, umfassend:
eine erste Fräseinrichtung, die ein erstes Fräswerkzeug (W1) mit einem ersten Bearbeitungsprofil und eine erste Antriebsspindel (1) aufweist, wobei die erste Fräseinrichtung in einer Arbeitsstellung angeordnet ist;
zumindest eine zweite Fräseinrichtung, die ein zweites Fräswerkzeug (W2) mit einem zweiten Bearbeitungsprofil aufweist und die zwischen einer Arbeitsstellung und einer Leerlauf-/Ruhestellung bewegbar ist; ein Motor (10) zum Antreiben der ersten Antriebsspindel (1);
eine Bewegungseinrichtung (5, 26), welche zum Bewegen zumindest der zweiten Fräseinrichtung zwischen der Arbeitsstellung und der Leerlaufstellung eingerichtet ist;
ein Gehäuse (9, 11), in dem die Fräseinrichtungen, die Bewegungseinrichtung (5, 26) und der Motor (10) aufgenommen sind;
die zweite Fräseinrichtung, zumindest eine zweite Spindel (2) aufweist, wobei die zweite Fräseinrichtung koaxial mit der ersten Fräseinrichtung angeordnet ist,
**dadurch gekennzeichnet, dass**
die Bewegungseinrichtung (5, 26) in Axialrichtung an der den Fräswerkzeugen (W1, W2) gegenüberliegenden Seite des Motors (10) angeordnet ist und über eine Welle (6), insbesondere Hohlwelle, die in der ersten Antriebsspindel (1) angeordnet ist, mit der Spindel (2) verbunden ist oder die Welle (6) einstückig mit der Spindel (2) ausgebildet ist.

2. Mehrprofilfräsvorrichtung nach Anspruch 1, bei der die Bewegungseinrichtung (elektro-)pneumatisch, (elektro-) hydraulisch und/oder (elektro-)magnetisch bewegt wird.

3. Mehrprofilfräsvorrichtung nach Anspruch 1 oder 2, die eine dritte Fräseinrichtung aufweist, die ein drittes Fräswerkzeug (W3) mit einem dritten Bearbeitungsprofil und eine dritte Spindel (3) aufweist, wobei die dritte Fräseinrichtung koaxial mit der ersten Fräseinrichtung angeordnet ist und die dritte Fräseinrichtung zwischen der Arbeitsstellung und einer Leerlauf-/Ruhestellung axial zur ersten Fräseinrichtung relativ bewegbar ist.

4. Mehrprofilfräsvorrichtung nach Anspruch 3, bei der das Bearbeitungsprofil des dritten Fräswerkzeugs (W3) das Bearbeitungsprofil des ersten und zweiten Fräswerkzeugs (W1, W2) so überlagert, dass das bearbeitete Werkstück das dritte Bearbeitungsprofil erhält, wenn sich die dritte Fräseinrichtung in der Arbeitsstellung befindet.

5. Mehrprofilfräsvorrichtung nach einem der Ansprüche 3 oder 4, bei der die zweite und die dritte Fräseinrichtung so eingerichtet sind, dass sie nicht zusammen in der Arbeitsstellung sind oder bei der die zweite und die dritte Fräseinrichtung so eingerichtet sind, dass sie zusammen in der Arbeitsstellung sind.

6. Mehrprofilfräsvorrichtung nach einem der vorhergehenden Ansprüche, bei der zumindest eine der (Antriebs-)Spindeln (1, 2, 3) als Hohlprofilwelle ausgestaltet ist.

7. Mehrprofilfräsvorrichtung nach einem der vorhergehenden Ansprüche, bei der die Drehung der ersten Antriebsspindel (1) über einen oder mehrere Mitnehmerstift(e) (15, 16) auf die andere(n) Spindel(n) übertragen wird und/oder bei der die andere(n) Antriebsspindel(n) über einen oder mehrere separate Motoren angetrieben werden.

## Claims

1. Multi-profile milling device for cutting machining of preferably panel-like workpieces made of wood, derived timber products and/or plastics, in particular for machining of the edges of the narrow sides of the workpieces, comprising:
a first milling device which has a first milling tool (W1) with a first machining profile and a first drive spindle (1), wherein the first milling device is arranged in a working position;
at least one second milling device which has a second milling tool (W2) with a second machining profile and which can be moved between a working position and an idling position/rest position;
a motor (10) for driving the first drive spindle (1);
a movement device (5, 26) which is equipped to move at least the second milling device between the working position and the idling positon;
a housing (9, 11), in which the milling devices, the movement device (5, 26) and the motor (10) are accommodated;
the second milling device has at least one second spindle (2), wherein the second milling device is arranged to be coaxial with the first milling device,
**characterised in that**
the movement device (5, 26) is arranged in axial direction on the side of the motor (10) opposite the milling tools (W1, W2) and is connected to the spindle (2) via a shaft (6), in particular hollow shaft, which is arranged in the first drive spindle (1), or the shaft (6) is designed to be integral with the spindle (2).

2. Multi-profile milling device according to claim 1, in which the movement device is moved (electro-)pneumatically, (electro-)hydraulically and/or (electro-)magnetically.

3. Multi-profile milling device according to claim 1 or 2, which has a third milling device which has a third milling tool (W3) with a third machining profile and a third spindle (3), wherein the third milling device is arranged to be coaxial with the first milling device and the third milling device can be moved relatively between the working position and an idling position/rest position axially to the first milling device.

4. Multi-profile milling device according to claim 3, in which the machining profile of the third milling tool (W3) overlies the machining profile of the first and second milling tool (W1, W2) so that the machined workpiece receives the third machining profile when the third milling device is located in the working position.

5. Multi-profile milling device according to one of claims 3 or 4, in which the second and the third milling device are equipped so that they are not together in the working position or in which the second and the third milling device are equipped so that they are together in the working position.

6. Multi-profile milling device according to one of the preceding claims, in which at least one of the (drive) spindles (1, 2, 3) is designed as a hollow profile shaft.

7. Multi-profile milling device according to one of the preceding claims, in which the rotation of the first drive spindle (1) is transferred via one or more follower pin(s) (15, 16) to the other spindle(s) and/or in which the other drive spindle(s) are driven via one or more separate motors.

## Revendications

1. Dispositif de fraisage à profils multiples pour usiner par enlèvement de copeaux des pièces présentant de manière préférée une forme de panneau, en bois, en des matériaux dérivés du bois et/ou en matières synthétiques, en particulier pour usiner les chants des tranches de pièces, comprenant :
un premier système de fraisage, qui présente un premier outil de fraisage (W1) présentant un premier profil d'usinage et une première broche d'entraînement (1), dans lequel le premier système de fraisage est disposé dans une position de travail ;
au moins un deuxième système de fraisage, qui présente un deuxième outil de fraisage (W2) présentant un deuxième profil d'usinage et qui peut être déplacé entre une position de travail et une position de marche à vide/de repos ;
un moteur (10) pour entraîner la première broche d'entraînement (1) ;
un système de déplacement (5, 26), qui est mis au point afin de déplacer au moins le deuxième système de fraisage entre la position de travail et la position de marche à vide ;
un boîtier (9, 11), dans lequel les systèmes de fraisage, le système de déplacement (5, 26) et le moteur (10) sont logés ;
le deuxième système de fraisage présentant au moins une deuxième broche (2), dans lequel le deuxième système de fraisage est disposé de manière coaxiale avec le premier système de fraisage,
**caractérisé en ce**
**que** le système de déplacement (5, 26) est disposé dans la direction axiale au niveau du côté, faisant face aux outils de fraisage (W1, W2), du moteur (10) et est relié à la broche (2) par l'intermédiaire d'un arbre (6), en particulier d'un arbre creux, qui est disposé dans la première broche d'entraînement (1), ou en ce que l'arbre (6) est réalisé d'un seul tenant avec la broche (2).

2. Dispositif de fraisage à profils multiples selon la revendication 1, dans lequel le système de déplacement est déplacé de manière (électro)-pneumatique, (électro)-hydraulique et/ou (électro)-magnétique.

3. Dispositif de fraisage à profils multiples selon la revendication 1 ou 2, lequel présente un troisième système de fraisage, qui présente un troisième outil de fraisage (W3) présentant un troisième profil d'usinage et qui présente une troisième broche (3), dans lequel le troisième système de fraisage est disposé de manière coaxiale avec le premier système de fraisage et le troisième système de fraisage peut être déplacé de manière relative entre la position de travail et une position de marche à vide/de repos de manière axiale par rapport au premier système de fraisage.

4. Dispositif de fraisage à profils multiples selon la revendication 3, dans lequel le profil d'usinage du troisième outil de fraisage (W3) surmonte le profil d'usinage du premier et du deuxième outil de fraisage (W1, W2) de telle sorte que la pièce usinée reçoit le troisième profil d'usinage quand le troisième système de fraisage se trouve dans la position de travail.

5. Dispositif de fraisage à profils multiples selon la revendication 3 ou 4, dans lequel le deuxième et le troisième système de fraisage sont mis au point de telle sorte qu'ils ne sont pas ensemble dans la position de travail ou où le deuxième et le troisième système de fraisage sont mis au point de telle sorte qu'ils sont ensemble dans la position de travail.

6. Dispositif de fraisage à profils multiples selon l'une quelconque des revendications précédentes, dans lequel au moins une des broches (d'entraînement) (1, 2, 3) est configurée sous la forme d'un arbre profilé creux.

7. Dispositif de fraisage à profils multiples selon l'une quelconque des revendications précédentes, dans lequel la rotation de la première broche d'entraînement (1) est transmise par l'intermédiaire d'une ou de plusieurs tiges entraîneuses (15, 16) sur l'autre broche/les autres broches et/ou où la/les autre(s) broche(s) d'entraînement est/sont entraînée(s) par l'intermédiaire d'un ou de plusieurs moteurs séparés.
